# EUROPÄISCHE PATENTSCHRIFT

(11) **EP 3 844 564 B1**
(45) Veröffentlichungstag und Bekanntmachung des Hinweises auf die Patenterteilung: **04.11.2026**
(21) Anmeldenummer: 19759562.2
(22) Anmeldetag: 27.08.2019
(51) Int. Cl.: G02C 7/10, G02C 7/06

(54) **BRILLENGLAS, VERWENDUNG EINES BRILLENGLASES UND VERFAHREN ZUM HERSTELLEN EINES BRILLENGLASES**
EYEGLASS LENS, USE OF AN EYEGLASS LENS, AND PROCESS FOR MANUFACTURING AN EYEGLASS LENS
VERRE DE LUNETTES, UTILISATION D'UN VERRE DE LUNETTES ET PROCÉDÉ DE FABRICATION D'UN VERRE DE LUNETTES

(30) Priorität: 28.08.2018 DE 102018006794
(43) Veröffentlichungstag der Anmeldung: 07.07.2021
(73) Patentinhaber: Rodenstock GmbH, 80687 München (DE)
(72) Erfinder: VÖGT, Michael, 82205 Gilching (DE); WELK, Andrea, 81547 München (DE); SOMMER, Hans-Peter, 80999 München (DE); ZINNER, Herbert, 85296 Rohrbach (DE)
(74) Vertreter: Müller-Boré & Partner Patentanwälte PartG mbB
(86) Internationale Anmeldenummer: PCT/EP2019/072791
(87) Internationale Veröffentlichungsnummer: WO 2020/043699

(56) Entgegenhaltungen:
- WO-A1-2017/074434
- WO-A1-2018/083038
- WO-A2-2019/145782
- FR-A1- 2 349 149
- GB-A- 1 520 099

## Beschreibung

Die Erfindung betrifft ein Brillenglas, die Verwendung eines Brillenglases und ein Verfahren zum Herstellen eines Brillenglases.

Die Erfindung betrifft spezieller eine Brille für einen Fahrzeuglenker, der zum Beispiel ein Kraftfahrzeug fährt. Beim Autofahren ist die Verwendung von Sonnenbrillen hilfreich, welche die direkte Sonneneinstrahlung reduzieren und somit ein Blenden des Autofahrers bei Gegenlicht reduzieren. Normale Sonnenbrillen weisen allerdings den Nachteil auf, dass insbesondere bei Gegenlicht, also zum Beispiel bei einer tiefstehenden Sonne, Armaturen im Fahrzeuginneren kaum oder nur sehr schwierig abgelesen werden können. Dies betrifft insbesondere die Schwierigkeit, unbeleuchtete Armaturen abzulesen.

Zwar können normale Brillen ohne Färbung und/oder Tönung zum Autofahren verwendet werden, doch ist bei diesen die ungehinderte, direkte Sonneneinstrahlung störend und kann den Autofahrer stark blenden.

Druckschrift GB 1 520 099 offenbart dabei ein Brillenglas, welches ohne Lichteinstrahlung eine einheitliche Transmission von ca. 75% aufweist, und bei Lichteinfall im oberen Bereich eine stark reduzierte Transmission von etwa 10%, welche nach unten hin zunimmt auf ca. 75%.

Druckschrift WO 2017/074434 A1 betrifft optische Linsen wie z.B. ophthalmische Linsen, welche in unterschiedlichen Bereichen unterschiedliche Polarizations-, Färbungs-, und/oder photochrome Eigenschaften aufweisen können.

Der Erfindung liegt die Aufgabe zugrunde, ein Brillenglas bereitzustellen, das insbesondere zur Verwendung beim Autofahren geeignet ist.

Diese Aufgabe wird durch die Gegenstände der unabhängigen Ansprüche gelöst.

Bevorzugte Ausführungsformen sind die Gegenstände der abhängigen Ansprüche.

Ein Aspekt betrifft ein Brillenglas gemäß Anspruch 1. Das

Brillenglas ist zumindest im zweiten Brillenglasbereich phototrop ausgebildet.

Der erste Brillenglasbereich und der zweite Brillenglasbereich sind voneinander verschieden und weisen keine Überschneidung auf. Der erste Brillenglasbereich kann somit vollständig verschieden zum zweiten Brillenglasbereich sein. Der erste Brillenglasbereich ist im Mittel stärker gefärbt als der zweite Brillenglasbereich im Mittel gefärbt ist. Zusammen können der erste Brillenglasbereich und der zweite Brillenglasbereich zumindest 75% der gesamten Brillenglasfläche ausmachen, bevorzugt zumindest etwa 80% der gesamten Brillenglasfläche.

Das Brillenglas kann als ein Brillenglasrohling ausgebildet sein oder als ein formgerandetes Brillenglas, also als ein Brillenglas, das so gerandet ist, dass es ohne weitere Bearbeitung in eine bestimmte Brillenfassung eingesetzt werden kann. Dieser Aspekt kann insbesondere eine fertige Brille umfassen, also eine Brillenglasfassung in die zwei formgerandete Brillengläser eingesetzt sind.

Die Färbung kann als eine Tönung ausgebildet sein, die die Transmission in Abhängigkeit von der Stärke der Färbung und/oder Tönung reduziert. So kann der erste Brillenglasbereich stark gefärbt ausgebildet sein und eine mittlere Färbung von etwa 40% bis etwa 90% aufweisen, bevorzugt von etwa 60% bis etwa 80%, was einer mittleren Absorption des sichtbaren Lichtbereichs in diesem Prozentbereich entspricht. Der zweite Brillenglasbereich kann schwach gefärbt und/oder im Wesentlichen ungefärbt ausgebildet sein, also eine Färbung von maximal 20%, bevorzugt von maximal 10% aufweisen. Anspruchsgemäß ist der erste Brillenglasbereich (10) stärker gefärbt ausgebildet als der zweite Brillenglasbereich (20), wobei der erste Brillenglasbereich (10) eine mittlere Absorption des sichtbaren Lichtbereichs von etwa 40% bis etwa 90% aufweist und der zweite Brillenglasbereich (20) eine mittlere Absorption des sichtbaren Lichtbereichs von maximal 20% aufweist. Die Färbung kann eine vorbestimmte Farbe wie z.B. braun, grau, gelb, grün, violett, etc. aufweisen.

Zumindest im zweiten Brillenglasbereich ist das Brillenglas phototrop ausgebildet. Insbesondere kann auch das gesamte Brillenglas (z.B. einschließlich des ersten Brillenglasbereichs) phototrop ausgebildet sein. Phototrope Gläser werden auch als selbsttönende Brillengläser bezeichnet. Solche Brillengläser können sich quasi automatisch an die Lichtverhältnisse anpassen. Phototrope Gläser weisen die Eigenschaft auf, dass sie sich mit einer zunehmenden Lichteinstrahlung von alleine tönen und somit abdunkeln. Hierbei reagieren phototrope Gläser insbesondere auf Lichteinstrahlung im UV-Bereich. Phototrope Gläser sind dazu ausgebildet, den unterschiedlichen starken Lichteinfall (insbesondere von UV-Licht) selbsttätig zu regulieren. Ohne Lichteinfall, insbesondere ohne UV-Lichteinfall, können sie nahezu vollständig transparent und/oder klar und ohne Tönung durchsichtig ausgebildet sein. Bei solchen Lichtverhältnissen kann die Lichtreduktion bei Durchdringung des ungetönten phototropen Glases etwa 10% betragen. Je nach Intensität der Einstrahlung des Lichtes, insbesondere des UV-Lichtes, ändert sich der Grad der Tönung. Im starken Sonnenlicht etwa kann es zu einer Abdunklung (entsprechend einer mittleren Absorption) von bis zu 90% kommen.

Hierbei kann die automatische Einstellung des phototropen Glases einen Zeitraum im zum Beispiel einstelligen Minutenbereich benötigen, während dessen sich das phototrope Glas an die aktuellen Lichtverhältnisse anpasst. Die Verfärbung bzw. Aufhellung erfolgt somit nicht instantan. Phototrope Brillengläser an sich sind bekannt.

Der zweite, phototrope Brillenglasbereich kann z.B. aus einem phototropen Glas und/oder Kunststoff ausgebildet sein und somit "durch und durch" (d.h. vollständig massiv) phototrop ausgebildet sein. Alternativ kann der zweite Brillenglasbereich ein (z.B. nicht-phototropes) Substrat mit einer phototropen Beschichtung aufweisen. Das Substrat kann als Glas und/oder Kunststoff ausgebildet sein. Das Substrat kann nichtpolarisierend oder polarisierend ausgebildet sein. Hierbei kann sich insbesondere ein polarisierendes Substrat mit einer phototropen Beschichtung als zweiter Brillenglasbereich eignen. Die polarisierende Wirkung des zweiten Brillenglasbereichs kann hierbei speziell auf die Eignung der Brille zum Autofahren abgestimmt sein.

Der erste Brillenglasbereich mit der starken Färbung kann als ein oberer Brillenglasbereich ausgebildet sein. Der zweite Brillenglasbereich mit der schwächeren Färbung kann als ein unterer Brillenglasbereich ausgebildet sein. Im Inneren eines Kraftfahrzeuges wird ein Großteil der UV-Lichteinstrahlung von den Autoscheiben aus dem einfallenden Lichtspektrum herausgefiltert. Deswegen ist das phototrope Brillenglas, bzw. der phototrope Brillenglasbereich im Inneren des Kraftfahrzeuges (zumindest bei geschlossenen Fenstern und Türen) üblicherweise nicht oder höchstens gering aktiviert und somit getönt. Dies bedeutet, dass der zweite Brillenglasbereich im Inneren des Kraftfahrzeugs aufgrund seiner phototropen Eigenschaft kaum eine Färbung und/oder maximal eine schwache Färbung aufweist, z.B. von etwa bis zu 20%. Somit kann beim Autofahren im Fahrzeuginneren ein Autofahrer die Armaturen durch den (z.B. unteren) zweiten Brillenglasbereich einfach ablesen. Durch den ersten Brillenglasbereich hindurch hat er auch im Fahrzeuginneren einen stärkeren Sonnenschutz durch dessen Verfärbung.

Verlässt der Autofahrer das Fahrzeuginnere, so bewirkt die ggf. vorhandene Sonneneinstrahlung eine davon abhängige Verfärbung der phototropen Brillenglasbereiche, also insbesondere des zweiten Brillenglasbereichs. Damit kann das Brillenglas außerhalb des Fahrzeugs als normales Brillenglas mit im Wesentlichen vollständig abgedunkelten Gläsern verwendet werden, wie bei einer Sonnenbrille.

Die Kombination eines zumindest zweifarbigen Brillenglases mit der phototropen Eigenschaft ist somit besonders geeignet zum Einsatz beim Autofahren. Grundsätzlich kann das Brillenglas jedoch auch für andere Zwecke benutzt werden, zum Beispiel beim Steuern anderer Fahrzeuge mit Fensterscheiben, die UV-Licht zumindest teilweise herausfiltern, wie z.B. in einer Pilotenbrille.

Gemäß einer Ausführungsform weist der erste Brillenglasbereich im sichtbaren Lichtbereich eine kleinere Transmission auf als der zweite Brillenglasbereich. Der erste Brillenglasbereich kann zum Beispiel eine Transmission im sichtbaren Lichtbereich aufweisen, die ungefähr der Transmission eines Brillenglases einer Sonnenbrille entspricht, also z.B. eine mittlere Transmission von etwa 10% bis etwa 60%. Der zweite Brillenglasbereich kann als im Wesentlichen ungefärbter und/oder ungetönter Brillenglasbereich ausgebildet sein, also im sichtbaren Lichtbereich eine mittlere Transmission von mindestens etwa 80% aufweisen, bevorzugt von mindestens etwa 90%. Mit dem sichtbaren Lichtbereich ist der Wellenlängenbereich von ca. 400 nm bis ca. 750 nm gemeint. Gemittelt über diesen Spektralbereich weist der erste Brillenglasbereich eine kleinere Transmission auf als der zweite Brillenglasbereich.

Hierbei kann die Transmission im ersten Brillenglasbereich im Mittel zumindest 40% geringer sein als im zweiten Brillenglasbereich, bevorzugt um zumindest 50%, besonders bevorzugt um zumindest 75%. Die Mittelung kann dabei über die Wellenlängen im sichtbaren Lichtbereich erfolgen und/oder über die Brillenglasfläche des jeweiligen Brillenglasbereiches. Anspruchsgemäß ist die phototrope Verfärbung des Brillenglases (1) derart auf die Färbung des ersten Brillenglasbereichs (10), oder des ersten und zweiten Brillenglasbereichs (10; 20) abgestimmt, dass bei einer vollständigen Aktivierung des phototropen zweiten Brillenglasbereichs (20) durch UV-Lichteinstrahlung das Brillenglas (1) optisch wie ein einfarbiges Brillenglas ohne Verlaufsfärbung aussieht, welches in allen Bereichen gleich stark und im gleichen Farbton gefärbt ist.

Somit kann der erste Brillenglasbereich im Wesentlichen als Sonnenbrillenglas wirken, während der zweite Brillenglasbereich (zumindest im Fahrzeuginneren) im Wesentlichen durchsichtig und klar, also ungefärbt ausgebildet ist. Im Außenbereich kann der zweite Brillenglasbereich jedoch abhängig von der Sonneneinstrahlung und von seiner phototropen Eigenschaft ebenfalls als Sonnenbrillenglas wirken. Die Angaben zur Transmission beziehen sich hierbei auf den gesamten Lichteinfall auf das Brillenglas, auch wenn dieses z.B. mit einer Entspiegelung versehen ist.

Die phototrope Verfärbung des Brillenglases (insbesondere des zweiten Brillenglasbereichs) ist auf die Färbung des ersten Brillenglasbereichs, oder des ersten und zweiten Brillenglasbereichs abgestimmt. Dies kann bedeuten, dass der Farbton der Färbung des ersten Brillenglasbereichs (und ggf. des zweiten Brillenglasbereichs) dem phototrop aktivierten Farbton entspricht, die der zweite Brillenglasbereich bei Lichteinstrahlung und Aktivierung annimmt. So kann zum Beispiel für den ersten Brillenglasbereich ein vorbestimmter Farbton wie z.B. braun für die Färbung verwendet werden, und die phototrope Verfärbung des zweiten Brillenglasbereichs im genau gleichen Farbton erfolgen (im Beispiel ebenfalls eine braune Verfärbung bei UV-Beaufschlagung).

Der zweite Brillenglasbereich kann eine Verfärbung mit demselben Farbton aufweisen, allerdings wie beschrieben entsprechend schwächer ausgeprägt als der erste Brillenglasbereich. Die phototrop bedingte Färbung kann somit sowohl im Hinblick auf den Farbton als auch im Hinblick auf deren Intensität und/oder Stärke auf die (physische) Färbung des ersten Brillenglasbereichs abgestimmt sein. Dies kann bedeuten, dass bei einer vollständigen Aktivierung des phototropen zweiten Brillenglasbereichs durch UV-Lichteinstrahlung der zweite Brillenglasbereich etwa die gleiche Farbe und/oder etwa die gleiche Farbstärke und/oder Farbintensität aufweist wie der erste Brillenglasbereich. In diesem Fall sieht das Brillenglas optisch wie ein einfarbiges Brillenglas ohne Verlaufsfärbung auf, welches in allen Bereichen gleich stark und/oder im gleichen Farbton gefärbt ist. Dadurch kann der optische Gesamteindruck des Brillenglases verbessert werden und zudem eine Irritation des Brillenglasträgers durch unterschiedliche Farbtöne bzw. Farbstärken reduziert werden.

Gemäß einer Ausführungsform weist der erste Brillenglasbereich im sichtbaren Lichtbereich eine mittlere Transmission von maximal etwa 20% auf, bevorzugt zwischen etwa 60% und etwa 80%, und/oder der zweite Brillenglasbereich im sichtbaren Lichtbereich eine mittlere Transmission von mindestens etwa 60% auf, bevorzugt von mindestens etwa 85%. Die mittlere Transmission ist hierbei gemittelt über die Wellenlängen des sichtbaren Lichtbereichs und/oder über die Fläche, die der jeweilige Brillenglasbereich einnimmt. Die Angaben zur Transmission beziehen sich hierbei auf den gesamten Lichteinfall auf das Brillenglas, einschließlich einer ggf. vorhandenen Entspiegelungsschicht. Damit unterscheidet sich die Transmission der Brillenglasbereiche deutlich voneinander.

Gemäß einer Ausführungsform ist der erste Brillenglasbereich als ein oberer Brillenglasbereich ausgebildet, welcher zumindest einen Fernbezugspunkt und/oder einen Ferndurchblickspunkt des Brillenglases umfasst. Der erste Brillenglasbereich kann insbesondere auch einen etwa kreisförmigen Glasflächenbereich um den Fernbezugspunkt bzw. den Ferndurchblickspunkt herum umfassen, wobei der Glasflächenbereich einen Durchmesser von zumindest 4 mm aufweisen kann, bevorzugt von zumindest 6 mm, besonders bevorzugt von zumindest 8 mm. Mit anderen Worten kann der erste Brillenglasbereich bereits einige Millimeter unterhalb des Fernbezugspunkts und/oder des Ferndurchblickspunkts beginnen.

Mit dem Fernbezugspunkt ist hierbei der Fernbezugspunkt eines Gleitsichtglases oder eines progressiven Brillenglases bezeichnet. Der Ferndurchblickspunkt bezeichnet hierbei den Durchblickspunkt in die Ferne eines Einstärkenglases bzw. eines nichtoptischen Brillenglases. Damit ist der Träger einer Brille mit diesem Brillenglas beim Blicken in die Ferne, also insbesondere unter der normalen Blickrichtung beim Autofahren, durch den stärker gefärbten ersten Brillenglasbereich vor Sonneneinstrahlung geschützt.

Allgemein kann der Fernbezugspunkt als der primäre Bezugspunkt gemäß der DIN EN ISO 21987 von 2017 und/oder als der Fern-Konstruktionsbezugspunkt gemäß der DIN EN ISO 13666 von 2013 und/oder als der Fern-Bezugspunkt Hauptbezugspunkt gemäß der DIN EN ISO 13666 von 2013 definiert sein. Der Ferndurchblickspunkt kann als Fern-Durchblickpunkt gemäß der DIN EN ISO 13666 von 2013 definiert sein. Dieser kann mit dem Fernbezugspunkt zusammenfallen.

In einer Weiterbildung umfasst der erste, obere Brillenglasbereich die gesamte Fläche des Brillenglases, die in Gebrauchsstellung oberhalb des Fernbezugspunkts und/oder des Ferndurchblickspunkts angeordnet ist. Mit anderen Worten ist der gesamte obere Brillenglasbereich vom oberen Brillenglasrand bis zumindest zum Fernbezugspunkt und/oder Ferndurchblickspunkt mit der stärkeren Färbung versehen, also als der erste Brillenglasbereich ausgebildet. Somit ist der Brillenträger geschützt bei Lichteinstrahlung von vorne und oben.

Gemäß einer Ausführungsform ist der zweite Brillenglasbereich als ein unterer Brillenglasbereich ausgebildet, welcher zumindest einen Nahbezugspunkt und/oder einen Nahdurchblickspunkt des Brillenglases umfasst. Der zweite Brillenglasbereich kann hierbei insbesondere auch einen Bereich um den Nahbezugspunkt und/oder den Nahdurchblickspunkt herum umfassen, zum Beispiel einen etwa kreisförmigen Glasflächenbereich mit einem Durchmesser von zumindest 4 mm, bevorzugt zumindest 6 mm, besonders bevorzugt zumindest 8 mm. Hierbei beginnt der zweite, untere Brillenglasbereich bereits oberhalb des Nahbezugspunkts und/oder des Nahdurchblickspunkts.

Der Nahbezugspunkt ist hierbei der Nahbezugspunkt eines Gleitsichtglases oder eines progressiven Brillenglases. Der Nahdurchblickspunkt ist ein Punkt auf einem Brillenglas einheitlicher Stärke, der im Wesentlichen dem Nahbezugspunkt eines progressiven Brillenglases entspricht. Bei dieser Ausführungsform erfolgt ein Lesen somit durch den zweiten Brillenglasbereich hindurch, also durch den weniger starken bzw. ungefärbten Brillenglasbereich. Dies vereinfacht das Ablesen von Armaturen im Fahrzeuginneren, insbesondere bei Gegenlicht.

Allgemein kann der Nahbezugspunkt als der sekundäre Bezugspunkt gemäß der DIN EN ISO 21987 von 2017 und/oder als der Nah-Konstruktionsbezugspunkt gemäß der DIN EN ISO 13666 von 2013 definiert sein. Der Nahdurchblickspunkt kann als Nah-Durchblickpunkt gemäß der DIN EN ISO 13666 von 2013 definiert sein. Dieser kann mit dem Nahbezugspunkt zusammenfallen.

In einer Weiterbildung umfasst der zweite, untere Brillenglasbereich die gesamte Fläche des Brillenglases, die in Gebrauchsstellung unterhalb des Nahbezugspunkts und/oder des Nahdurchblickspunkts angeordnet ist. Mit anderen Worten umfasst der zweite Brillenglasbereich den gesamten unteren Brillenglasbereich vom unteren Brillenglasrand bis zumindest zum Nahbezugspunkt und/oder Nahdurchblickspunkt, bevorzugt auch noch ein paar Millimeter darüber hinaus, zum Beispiel zwischen etwa 2 mm bis etwa 10 mm darüber hinaus, bevorzugt von etwa 3 mm bis etwa 6 mm darüber hinaus.

Gemäß einer Ausführungsform ist zwischen dem ersten Brillenglasbereich und dem zweiten Brillenglasbereich ein Übergangsbereich ausgebildet, entlang dessen die Färbung des Brillenglases vom ersten Brillenglasbereich zum zweiten Brillenglasbereich abnimmt. Der erste Brillenglasbereich, der zweite Brillenglasbereich und der Übergangsbereich können zusammen die gesamte Fläche des Brillenglases ausmachen. Die drei Glasbereiche können keinerlei Überschneidung aufweisen, können also flächig voneinander getrennt ausgebildet sein. Der Übergangsbereich kann sich von einem temporalen Brillenglasrand etwa horizontal über das gesamte Brillenglas zu einem nasalen Brillenglasrand erstrecken. Das Brillenglas kann von dem Übergangsbereich in den ersten Brillenglasbereich und den Brillenglasbereich unterteilt werden. Hierbei weisen der erste Brillenglasbereich und der zweite Brillenglasbereich keine unmittelbare Grenze zueinander auf, sondern sie sind über den Übergangsbereich voneinander beabstandet angeordnet. Im ersten Brillenglasbereich und/oder im zweiten Brillenglasbereich kann die Verfärbung im Wesentlichen konstant ausgebildet sein. Die Verfärbung kann sich lediglich entlang des Übergangsbereichs ändern bezüglich ihrer Stärke. Der Farbton der Verfärbung kann in allen drei Bereichen gleich ausgebildet sein, z.B. braun. Der Übergangsbereich bewirkt einen sanften Farbübergang zwischen dem ersten und zweiten Brillenglasbereich und verhindert einen plötzlichen, irritierenden Farbübergang zwischen diesen beiden Bereichen.

In einer Weiterbildung verändert sich die Verfärbung entlang dem Übergangsbereich etwa kontinuierlich von dem Färbegrad des ersten Brillenglasbereichs zum Färbegrad des zweiten Brillenglasbereichs. Hierbei kann die Verfärbung in z.B. vertikaler Richtung somit quasi stufenlos zwischen den beiden Brillenglasbereichen abnehmen bzw. zunehmen. Die Änderung kann in Gebrauchsstellung entlang einer im Wesentlichen vertikalen Richtung zunehmen bzw. abnehmen.

In einer Weiterbildung verändert und/oder verändern sich die Färbung und/oder der Absorptionsgrad entlang dem Übergangsbereich etwa gemäß der Formel: $f \left(y′\right) = a 1 + \frac{a 2 - a 1}{\left(1+{e}^{c \left(y′-d\right)}\right)}$

Hierbei entspricht a1 einem maximalen Absorptionsgrad, a2 einem minimalen Absorptionsgrad, c einem Faktor zur Steuerung des Funktionsverlaufs, d der Lage eines Umkehrpunkts und y' entweder der vertikalen Brillenglaskoordinate y, oder einer um einen Winkel β zur der vertikalen Brillenglaskoordinate y verdrehten Brillenglaskoordinate y'. Direkt proportional zur Stärke der Färbung kann sich der Absorptionsgrad ändern.

Abhängig von der Größe des Faktors c ändert sich der Absorptionsgrad (und somit der Transmissionsgrad) entsprechend schnell oder weniger schnell. a1 entspricht etwa der Einfärbung des ersten Brillenglasbereichs, also in etwa dessen Absorption. a2 entspricht etwa der Einfärbung des zweiten Brillenglasbereichs, also etwa dessen Absorption. d legt die Höhe des Umkehrpunkts der Funktion fest, entspricht also in etwa der vertikalen Mitte des Übergangsbereichs. Durch Lage des Umkehrpunkts d kann somit die vertikale Höhe des Farbverlaufs definiert werden. y' kann der vertikalen Brillenglaskoordinate y entsprechen und kann abhängig von einem Mittelpunkt des Brillenglases definiert sein. Dabei kann die Brillenglaskomponente y' auch winklig zur tatsächlichen Vertikalen angeordnet sein, so dass sie auch eine horizontale Komponente aufweist.

In der Ausführungsform, in welcher y' der vertikalen Brillenglaskoordinate y entspricht, ergibt sich ein ausschließlich in vertikale Richtung veränderter Farbverlauf entlang des Brillenglases. In horizontaler Richtung, also in nasaler und/oder temporaler Richtung, ist die Färbung und damit die Absorption des Brillenglases konstant. Hierbei kann die obige Formel für die gesamte horizontale Breite des Brillenglases gelten. Dabei ändert sich die Stärke der Färbung und somit die Absorption lediglich in vertikale Richtung entlang des Brillenglases, nicht aber in horizontale Richtung.

Alternativ kann die obige Formel auch lediglich in einem horizontal mittleren Brillenglasbereich gelten, also z.B. von x=-5 mm bis x=+5 mm, wobei x der horizontalen Koordinate des Brillenglases entspricht. An dem nasalen und/oder temporalen Rand des Brillenglases kann der Farbverlauf etwas nach oben oder unten verschoben sein durch einen anderen Wert für den Umkehrpunkt d und/oder einen anderen Steuerungsfaktor c.

In einer Weiterbildung verändert sich die Färbung des Brillenglases im Übergangsbereich entlang einer vertikalen Strecke von etwa 5 mm bis etwa 20 mm, bevorzugt zwischen etwa 5 mm und etwa 10 mm. Diese Strecke gibt im Wesentlichen die vertikale Höhe des Übergangsbereichs an, entlang dessen sich die Verfärbung ändert. Diese relativ schmale und/oder niedrige Ausbildung des Übergangsbereichs bewirkt eine gute Trennung zwischen dem ersten Brillenglasbereich und dem zweiten Brillenglasbereich mit den von diesem Brillenglasbereich bereitgestellten Funktionalitäten.

Gemäß einer Ausführungsform ist der Übergangsbereich in einem Brillenglasbereich angeordnet, der bei einem Blickwinkel von mindestens etwa 5° unterhalb der Nullblickrichtung beginnt und bei einem Blickwinkel von maximal etwa 25° unterhalb der Nullblickrichtung endet. Dadurch ist sichergestellt, dass die Nullblickrichtung selber im ersten Brillenglasbereich angeordnet ist und der untere Brillenglasbereich, insbesondere unterhalb von zumindest 25°, im zweiten Brillenglasbereich angeordnet ist. Die Nullblickrichtung ergibt sich aus den hierfür einschlägigen Normen.

In einer Weiterbildung weist das Brillenglas einen Brechwertverlauf mit einer Addition auf. Dabei ist der Übergangsbereich in einem Brillenglasbereich von etwa 10% der Addition bis etwa 50% der Addition im Brechwertverlauf angeordnet. Bei Brillengläsern mit einer Addition an den Brechwertverlauf, also etwa progressiven Brillengläsern, kann der Farbverlauf entlang des Übergangsbereichs an dem Brechwertverlauf angepasst sein.

Der zweite (schwach getönte oder ungetönte) Brillenglasbereich kann eine berechnete Objektentfernung entlang des Brechwertverlaufs von etwa 80 cm umfassen. In diesem Abstand sollten die meisten Armaturen im Fahrzeuginneren angeordnet sein, so dass diese gut abgelesen werden können durch den zweiten Brillenglasbereich hindurch.

In einer Weiterbildung weist das Brillenglas einen Fernbezugspunkt auf und/oder einen Ferndurchblickspunkt. Eine Oberkante des Übergangsbereichs ist zwischen etwa 5 mm und etwa 20 mm unterhalb des Fernbezugspunkts und/oder des Ferndurchblickspunkts angeordnet. Hierbei kann die Lage des Farbverlaufs definiert sein durch den Abstand des Beginns des Farbverlaufs zum Fernbezugspunkt und/oder zum Ferndurchblickspunkt eines progressiven Brillenglases bzw. Einstärkenglases. Die Oberkante des Übergangsbereichs sollte zwischen etwa 5 mm und etwa 20 mm unterhalb des Fernbezugspunkts und/oder Ferndurchblickspunkts angeordnet sein, bevorzugt zwischen etwa 5 mm und etwa 10 mm unterhalb des Fernbezugspunkts und/oder Ferndurchblickspunkts. Dadurch ergibt sich ein besonders sicheres und geschütztes Sehen durch den ersten Brillenglasbereich beim Autofahren.

Gemäß einer Ausführungsform ist die Färbung der Brillenglasbereiche als eine braune Färbung ausgebildet. Hierbei kann insbesondere der erste Brillenglasbereich und ggf. der Übergangsbereich und/oder der zweite Brillenglasbereich eine braune Färbung aufweisen. Außerdem kann auch die phototrope Eigenschaft des zumindest zweiten Brillenglasbereichs eine braune Verfärbung des Brillenglases bewirken, wobei die beiden Brauntöne einander etwa entsprechen können. Die braune Färbung weist üblicherweise einen deutlich höheren Rotanteil als andere Färbungen auf, zum Beispiel grüne oder graue Färbungen. Dies bedeutet, dass die Transmission im roten Wellenlängenbereich bei braunen Färbungen größer ist als bei anderen Färbungen. Dies ermöglicht ein besseres Sehen in der Dämmerung, da der Anteil des langwelligen (roten) Lichtes in der Dämmerung zunimmt. Gerade in der Dämmerung steht die Sonne tief und kann ein Ablesen von Armaturen besonders behindern. Weiterhin ermöglicht die braune Verfärbung eine verstärkte Sichtbarkeit roter Lichtquellen wie z.B. Rücklichter und/oder Bremslichter in der Dämmerung und/oder bei schlechtem Wetter. Dadurch kann eine braune Färbung gegenüber anderen Farben eine verbesserte Verkehrssicherheit bewirken.

Gemäß einer Ausführungsform ist der erste Brillenglasbereich und/oder der zweite Brillenglasbereich etwa über die gesamte Brillenglasfläche, über welche der jeweilige Brillenglasbereich ausgebildet ist, etwa gleichmäßig stark gefärbt ausgebildet. Mit anderen Worten ist der erste Brillenglasbereich im Wesentlichen gleich stark getönt, während der zweite Brillenglasbereich im Wesentlichen über seine gesamte Fläche ungetönt (oder konstant leicht getönt) ausgebildet ist. Einen Farbverlauf weist keiner der beiden Brillenglasbereiche auf. Ein solcher Farbverlauf kann, wenn überhaupt, lediglich im voranstehend genannten Übergangsbereich ausgebildet sein. Durch die jeweils im Wesentlichen einfarbige Ausbildung der beiden Brillenglasbereiche werden Irritationen des Brillenglasträgers durch etwaige Farbverläufe reduziert.

Gemäß einer Ausführungsform weist das Brillenglas eine Entspiegelungsschicht auf, welche im Wellenlängenbereich zwischen 450nm und 550nm einen Restreflex von weniger als 4% pro Brillenglasseite des einfallenden Lichts aufweist, bevorzugt von weniger als 2% pro Brillenglasseite des einfallenden Lichts, besonders bevorzugt von weniger als 1% pro Brillenglasseite des einfallenden Lichts. Eine solche qualitativ hochwertige Entspiegelung eignet sich besonders für Brillengläser zum Autofahren, da somit störende Lichtreflexe besonders gut reduziert werden.

Ein Aspekt betrifft die Verwendung eines Brillenglases gemäß dem voranstehenden Aspekt in einer Brillenfassung beim Autofahren. Wie voranstehend beschrieben, eignet sich das Brillenglas insbesondere beim Autofahren, da der erste Brillenglasbereich im Wesentlichen als Sonnenbrillenglas wirken und/oder ausgebildet sein kann, während der zweite Brillenglasbereich das Ablesen von Armaturen und/oder anderen Details im Fahrzeuginneren vereinfacht, insbesondere bei Gegenlicht.

Ein Aspekt betrifft ein Verfahren zum Herstellen eines Brillenglases für eine Brillenfassung, wobei ein erster Brillenglasbereich stärker gefärbt wird als ein zweiter Brillenglasbereich, und wobei der zweite Brillenglasbereich als ein phototroper Brillenglasbereich bereitgestellt und/oder ausgebildet wird.

Das Verfahren kann insbesondere zum Herstellen eines Brillenglases gemäß dem eingangs beschriebenen Aspekt verwendet werden. Deswegen beziehen sich sämtliche Ausführungen zum Brillenglas auch auf das Verfahren und umgekehrt.

Im Rahmen dieser Erfindung können die Begriffe "im Wesentlichen" und/oder "etwa" so verwendet sein, dass sie eine Abweichung von bis zu 5% von einem auf den Begriff folgenden Zahlenwert beinhalten, eine Abweichung von bis zu 5° von einer auf den Begriff folgenden Richtung und/oder von einem auf den Begriff folgenden Winkel.

Begriffe wie oben, unten, oberhalb, unterhalb, usw. beziehen sich - sofern nicht anders spezifiziert - auf das Bezugssystem der Erde in der Gebrauchsstellung des Brillenglases. Die Gebrauchsstellung ist in den einschlägigen diesbezüglichen Normen definiert.

Die Erfindung wird nachfolgend anhand von in Figuren gezeigten Ausführungsbeispielen näher beschrieben. Hierbei können gleiche oder ähnliche Bezugszeichen gleiche oder ähnliche Merkmale der Ausführungsformen kennzeichnen. Einzelne in den Figuren gezeigte Merkmale können in anderen Ausführungsbeispielen implementiert sein. Es zeigen:
- Fig. 1: in einer schematischen Darstellung ein Brillenglas mit einem Brechwertverlauf und einem Farbverlauf, zusammen mit einem zugehörigen Diagramm;
- Fig. 2A: in einem Diagramm zwei Ausführungsbeispiele eines Farbverlaufs entlang einer vertikalen Koordinate eines Brillenglases;
- Fig. 2B: in einem Diagramm zwei weitere Ausführungsbeispiele eines Farbverlaufs entlang einer vertikalen Koordinate eines Brillenglases;
- Fig. 3: in einer schematischen Darstellung ein Brillenglas mit einem Farbverlauf, der winklig zur Vertikalen angeordnet ist; und
- Fig. 4: in einem Diagramm den Reflexionsverlauf einer Entspiegelungsschicht des Brillenglases.

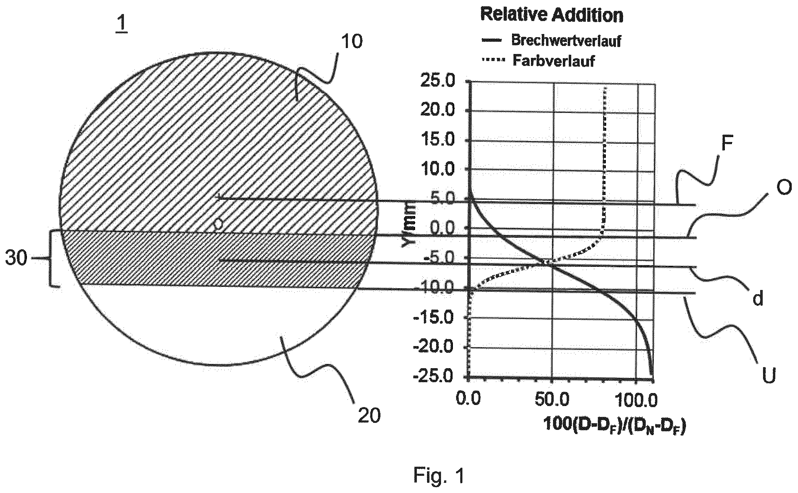

**Figur 1** zeigt in einer schematischen Darstellung ein Brillenglas 1, das einen Farbverlauf aufweist auf seiner Brillenglasfläche. Das Brillenglas 1 ist schematisch als rohrundes Brillenglas in der linken Hälfte der Figur 1 gezeigt.

Die geometrische Mitte des rohrunden Brillenglases ist durch einen Kreis markiert, der als eine Permanentmarkierung auf dem Brillenglas ausgebildet sein kann. Das Brillenglas 1 ist in insgesamt drei Brillenglasbereiche eingeteilt. Ein erster, oberer Brillenglasbereich 10 (schraffiert gekennzeichnet) erstreckt sich von einer vertikal oberen Grenze des Brillenglases, also einem oberen Brillenglasrand, bis zu einer Oberkante O eines Übergangsbereichs 30. Der Übergangsbereich 30 ist mit einer engen Schraffur gekennzeichnet und stellt einen weiteren (z.B. dritten) Brillenglasbereich dar. Vom vertikal unteren Ende des Brillenglases 1, also einem unteren Brillenglasrand, erstreckt sich ein zweiter, unterer Brillenglasbereich 20 bis hin zu einer Unterkante U des Übergangsbereichs 30.

Im gezeigten Ausführungsbeispiel umfasst der erste Brillenglasbereich 10 sowohl einen Fernpunkt F, welcher durch ein Kreuz markiert ist, als auch einen geometrischen Mittelpunkt des Brillenglases 1.

Definitionen für den Fernpunkt und/oder die geometrische Mitte können den dafür einschlägigen Normen entnommen werden. Weiterhin kann die Lage dieser Punkte teilweise herstellerabhängig sein.

Im gezeigten Ausführungsbeispiel umfasst der erste Brillenglasbereich 10 mehr als die (obere) Hälfte des rohrunden Brillenglases 1. Der gesamte erste Brillenglasbereich 10 ist gefärbt ausgebildet, und zwar über die gesamte Fläche etwa gleich stark mit einem etwa konstanten Farbton gefärbt. Dies bewirkt eine (über die Fläche des ersten Brillenglasbereichs) etwa konstante Absorption des Lichts, das durch den ersten Brillenglasbereich 10 einfällt.

Der zweite Brillenglasbereich 20 ist im Wesentlichen ungefärbt ausgebildet. Dabei ist die Stärke (also der Grad) und der Farbton der Färbung über den gesamten zweiten Brillenglasbereich im Wesentlichen konstant. Die Färbung trägt kaum oder beinahe gar nicht zur Absorption im zweiten Brillenglasbereich 20 bei.

Im Übergangsbereich 30 ändert sich die Färbung des Brillenglases 1. Hierbei weist der Übergangsbereich 30 an seiner Oberkante O im Wesentlichen die gleiche (starke) Färbung auf wie der erste Brillenglasbereich 10. An seiner Unterkante U weist der Übergangsbereich 30 im Wesentlichen die gleiche schwache Färbung auf wie der zweite Brillenglasbereich 20. Im gezeigten Ausführungsbeispiel ist an der Unterkante U im Wesentlichen keine Färbung mehr vorhanden, die Unterkante U ist somit ebenso wie der zweite Brillenglasbereich 20 im Wesentlichen transparent und ungefärbt ausgebildet.

Entlang des Übergangsbereichs 30 ändert sich die Färbung von der Oberkante O bis zur Unterkante U im Wesentlichen kontinuierlich. Von oben nach unten nimmt die Färbung des Brillenglases entlang des Übergangsbereichs 30 im Wesentlichen kontinuierlich ab.

Der genaue Verlauf der Färbung ist im rechten Teil der Figur 1 in einem Diagramm dargestellt. Hierbei ist der Farbverlauf durch eine gepunktete Linie gekennzeichnet. Wie in diesem rechts dargestellten Diagramm gezeigt, ist der gesamte erste, obere Brillenglasbereich 10 im Wesentlichen gleich stark eingefärbt. Im Ausführungsbeispiel weist er eine Färbung und/oder Absorption von etwa 80% auf.

Im Diagramm ist die y-Koordinate in Millimetern von -25 mm bis +25 mm entlang des rohrunden Brillenglases 1 gezeigt. Der erste Brillenglasbereich 10 erstreckt sich vom oberen Brillenglasrand, also zum Beispiel von ca. y=+25 mm bis kurz unterhalb der geometrischen Mitte, also bis kurz unterhalb des Nullpunkts, z.B. bis ca. y=-1 mm.

Der zweite Brillenglasbereich 20 erstreckt sich vom unteren Brillenglasrand, also zum Beispiel von etwa y=-25 mm, bis zur Unterkante U des Übergangsbereichs 30, welche bei ca. y=-11 mm angeordnet ist. Damit erstreckt sich der Übergangsbereich 30 von etwa y=-1 mm bis etwa y=-11 mm auf dem rohrunden Brillenglas 1. Entlang dieser vertikalen Strecke von etwa 10 mm reduziert sich die Absorption und der Farbverlauf von oben nach unten von ca. 80% auf etwa 0%. Ein Umkehrpunkt des Funktionsverlaufs ist als Linie eingezeichnet und mit einem d gekennzeichnet. Der Umkehrpunkt d markiert in etwa die vertikale Mitte des Übergangsbereichs 30. Der Umkehrpunkt d ist hier im gezeigten Ausführungsbeispiel etwa bei der y-Koordinate von -6,0 mm gezeigt.

Der Fernbezugspunkt F ist etwa bei y=+4,0 mm angeordnet und somit voll im ersten Brillenglasbereich 10 angeordnet.

Das Brillenglas 1 kann als ein progressives Brillenglas ausgebildet sein und einen Brechwertverlauf mit einer Addition aufweisen. Der Verlauf der Addition ist im Diagramm in der rechten Hälfte der Figur 1 ebenfalls gezeigt. Der Brechwertverlauf ist durch eine durchgezogene Linie gekennzeichnet. Eine ungefähre mathematische Formel für den Brechwertverlauf ist unterhalb des Diagramms in der rechten Hälfte der Figur 1 gezeigt.

Entlang des Übergangsbereichs kann die Färbung ungefähr mit der folgenden Gleichung beschrieben werden: $f \left(y\right) = a 1 + \frac{a 2 - a 1}{\left(1+{e}^{c \left(y-d\right)}\right)}$

Dies ist eine Funktion der vertikalen Koordinate y des Brillenglases 1. Dabei entspricht a1 dem maximalen Absorptionsgrad, im Ausführungsbeispiel etwa 80%. a2 entspricht dem minimalen Absorptionsgrad, im Ausführungsbeispiel ca. 0%. Die Variable c stellt einen Faktor zur Steuerung des Funktionsverlaufs dar, welcher bevorzugt von etwa 0,1 bis etwa 1,0 beträgt, bevorzugt von etwa 0,4 bis etwa 0,9, besonders bevorzugt bei etwa 0,7. Die Variable d gibt den Umkehrpunkt an und ist im in Figur 1 gezeigten Ausführungsbeispiel ungefähr bei y=-6 angeordnet. Durch die Definition des Umkehrpunkts wird die vertikale Mitte und/oder Lage des Übergangsbereichs 30 festgelegt.

Das Brillenglas 1 ist weiterhin phototrop ausgebildet. Hierbei sind insbesondere der zweite Brillenglasbereich 20 und auch der Übergangsbereich 30 phototrop ausgebildet. Bevorzugt ist das komplette Brillenglas 1 aus einem phototropen Material hergestellt, da dies am einfachsten herzustellen ist.

Die phototrope Eigenschaft bewirkt, dass sich bei Lichteinstrahlung einer speziellen Wellenlänge, insbesondere bei Lichteinstrahlung von UV-Licht, das Material des Brillenglases 1 verfärbt. Im ersten Brillenglasbereich 10 kann sich dies kaum auf das optische Aussehen und/oder die gesamte Absorption auswirken, da der erste Brillenglasbereich 10 ohnehin bereits gefärbt ausgebildet ist. Im Einzelfall kann die Färbung des ersten Brillenglasbereichs 10 durch die Aktivierung der phototropen Eigenschaft allerdings zusätzlich etwas abgedunkelt und/oder verfärbt werden.

Im Übergangsbereich 30 und insbesondere im zweiten Brillenglasbereich 20 macht sich die phototrope Eigenschaft des Brillenglases 1 stärker bemerkbar. Hier verfärbt sich das Brillenglas so, dass sowohl der Übergangsbereich 30 als auch der zweite Brillenglasbereich 20 in etwa genauso stark verfärbt sind wie der erste Brillenglasbereich 10. Optisch kann hierbei kaum noch ein Unterschied zwischen den unterschiedlichen Brillenglasbereichen 10, 20 und 30 ausgemacht werden.

Dabei weist unter UV-Einstrahlung auch der zweite Brillenglasbereich 20 und der Übergangsbereich 30 eine Absorption auf, die etwa der Absorption im ersten Brillenglasbereich 10 entspricht. Hierbei können leichte Abweichungen von maximal etwa 10% der Absorption auftreten, bevorzugt maximal 5% des Absorptionswertes über die gesamte Glasfläche.

Wie eingangs beschrieben eignet sich das Brillenglas 1 insbesondere zum Einsatz im Fahrzeug. Im Inneren eines Autos schaut der Fahrer üblicherweise etwa durch den Fernpunkt F auf die Straße, also durch den oberen, ersten Brillenglasbereich 10. Dabei ist der Fahrer durch die Absorptionswirkung des gefärbten ersten Brillenglasbereichs 10 vor zu stark einstrahlendem Licht geschützt.

Der Blick des Autofahrers auf die Oberkante seines Armaturenbretts kann ungefähr durch die Oberkante O des Übergangsbereichs 30 erfolgen. Die Lage des Übergangsbereichs 30 kann hierbei auf die Blickrichtung des Fahrers abgestimmt sein. Insbesondere kann die Unterkante U des Übergangsbereichs 30 noch oberhalb des Nahbezugspunkts angeordnet sein. Die Armaturen kann der Fahrer somit zumindest teilweise durch den zweiten Brillenglasbereich 20 ablesen. Weiterhin kann der Fahrer die Armaturen gegebenenfalls auch teilweise durch den Übergangsbereich 30 hindurch ablesen. Somit ist der Blick auf die Anzeigen und/oder den Armaturenbereich im Fahrzeuginneren kaum oder nur gering eingeschränkt und/oder behindert durch die Färbung des Brillenglases 1.

Durch das Brillenglas 1 wird sowohl eine funktionale Verlauffärbung im Fahrzeuginneren bereitgestellt, als auch ein ästhetisches Sonnenschutzglas im Freien.

Der Farbverlauf entlang des Brillenglases 1 kann auf den Blickwinkel des Brillenträgers durch das Brillenglas abgestimmt sein, insbesondere bei Einstärkengläsern und/oder bei progressiven Brillengläsern. Bei progressiven Brillengläsern kann der Farbverlauf auch auf den Brechwertverlauf und/oder die Objektentfernung abgestimmt sein.

Die Verlauffärbung kann so auf die Objektentfernung abgestimmt sein, dass sich die Verfärbung beim Blickwechsel vom Blick in die Ferne (entsprechend einer Objektentfernung von unendlich) in die Nähe (entsprechend einer Objektentfernung von ca. 40 cm) dahingehend ändert, dass der Übergang des Farbverlaufs bei den Objektentfernungen zwischen etwa 350 cm und etwa 50 cm erfolgt. Hierbei kann die Oberkante O des Übergangsbereichs 30 auf eine Objektentfernung von ca. 280 cm festgelegt werden, insbesondere in einem Bereich von ca. 350 cm bis 200 cm. Die Unterkante U des Übergangsbereichs 30 kann auf eine Objektentfernung von ca. 80 cm gelegt werden, bevorzugt in einem Bereich von ca. 120 cm bis ca. 50 cm.

Alternativ oder zusätzlich kann die Verlauffärbung so auf die Blickwinkel abgestimmt sein, dass sich die Verfärbung beim Blickwechsel vom Blick in die Ferne (entsprechend einem Blickwinkel von etwa 0°) in die Nähe (entsprechend einem Blickwinkel von etwa 30° bis etwa 40°) dahingehend ändert, dass der Übergang des Farbverlaufs zwischen den Blickwinkeln von etwa 5° bis 25° erfolgt. Die Oberkante O des Übergangsbereichs 30 kann z.B. auf einen Blickwinkel von ca. 8° (nach unten) gelegt werden, bevorzugt zwischen ca. 5° und ca. 10°. Die Unterkante U des Übergangsbereichs 30 kann auf einen Blickwinkel von ca. 20° (nach unten) festgelegt werden, bevorzugt auf einen Blickwinkel von ca. 15° bis ca. 25°.

Mit anderen Worten kann die Verlauffärbung, und insbesondere die Positionierung des Übergangsbereichs 30, an die Objektentfernung angepasst werden und/oder an den Blickwinkel. Dies kann sowohl bei progressiven Brillengläsern als auch bei Einstärkengläsern erfolgen.

In einem anderen Ausführungsbeispiel kann die Verlauffärbung individuell auf den Blickwinkel des Brillenträgers dahingehend abgestimmt werden, dass der Übergang des Verlaufs individuell auf die Nutzungsbedingungen des Brillenträgers abgestimmt ist. So kann die Entfernung und/oder die Blickwinkelhöhe der Armaturen im Auto abhängen von der Fahrzeugklasse und/oder des Fahrzeugtyps. Die Armaturenhöhen können stark vom Fahrzeugtyp abhängen. So können die Armaturen eines Sportwagens unterschiedlich hoch angeordnet sein als die eines SUV.

Weiterhin können auch die Sitzhöhe des Brillenträgers und/oder die eingestellte Sitzhöhenposition zu einer Veränderung der relativen Lage der Armaturen zum Brillenträger führen. Bei der individuellen Abstimmung der Verlaufsfärbung können die realen Bedingungen für einen Brillenträger individuell gemessen werden, und daran anschließend die Position des Übergangsbereichs auf die individuellen Abstände angepasst werden. So kann zum Beispiel die Oberkante O des Übergangsbereichs in etwa auf Höhe der Oberkante des Armaturenbretts gelegt werden. Damit ist sichergestellt, dass sämtliches direkt durch die Windschutzscheibe einfallendes Licht durch den ersten Brillenglasbereich 10 auf die Augen des Brillenträgers einfällt.

Die vertikale Höhe des Übergangsbereichs 30, also der genaue Wert der Variablen c, kann ebenfalls abhängig davon gewählt werden, wie hoch oder tief unterhalb der Oberkante des Armaturenbretts die ersten Anzeigen für den Brillenträger erkennbar sein sollten.

Die voranstehenden Abstimmungen der Verlauffärbung eignen sich sowohl für Einstärkengläser als auch für progressive Brillengläser. Nachfolgend werden zwei weitere Ausführungsformen beschrieben, welche speziell für progressive Brillengläser verwendet werden können.

Die Verlauffärbung kann komplett in Abhängigkeit vom Brechwertverlauf entlang des Brillenglases ausgebildet werden. Dabei kann die Färbung im Brillenglas kontinuierlich von oben nach unten gekoppelt an die Brechwertzunahme aufgrund einer Addition abnehmen. So kann zum Beispiel die Oberkante O des Übergangsbereichs 30 auf einen ersten y-Wert gelegt werden, zum Beispiel auf y=+4 mm, und die Unterkante U des Übergangsbereichs 30 auf einen zweiten y-Wert, zum Beispiel auf y=-14 mm.

Die Verlauffärbung kann weiterhin in Abhängigkeit vom Brechwertverlauf im Brillenglas ausgebildet werden. Dabei kann eine Abnahme der Färbung im Brillenglas von oben nach unten gekoppelt an eine Brechwertzunahme aufgrund einer Addition erfolgen. So kann der Übergangsbereich 30 zum Beispiel in einem Bereich zwischen erreichter Position von 10% und 50% der Addition im Brechwertverlauf positioniert werden. An diesen Prozentwerten der Addition können sich etwa die voranstehend genannten Blickwinkel ergeben.

Die voranstehend genannte Gleichung kann zur Erzeugung eines möglichst kontinuierlichen und stetigen Farbverlaufs verwendet werden. Dabei ergibt sich eine vertikale Höhe des Übergangsbereichs 30 zwischen einer (oberen) vorgegebenen Anfangsabsorption a1 und einer (unteren) vorgegebenen Endabsorption a2. Die Lage des Verlaufs und somit des Übergangsbereichs 30 kann definiert werden durch den Abstand des Beginns des Farbverlaufs, also der Oberkante O des Übergangsbereichs 30 zum Fernbezugspunkt F eines Gleitsichtglases und/oder dem Ferndurchblickspunkt eines Einstärkenglases. Dabei ist die Oberkante O des Übergangsbereichs 30 bevorzugt von etwa 5 mm bis etwa 20 mm unterhalb des Fernbezugspunkts F angeordnet, bevorzugt zwischen etwa 5 mm und etwa 10 mm unterhalb des Fernbezugspunkts und/oder des Ferndurchblickspunkts.

In der gezeigten Ausführungsform sind die Farbstärke und/oder der Farbton in horizontale Richtung, also nasal und temporal, der Färbung konstant. Somit ändert sich die Färbung entlang des Brillenglases in horizontaler Richtung nicht, unabhängig von der jeweiligen Höhe y auf dem Brillenglas 1. Eine solche Verlaufsfärbung ist besonders einfach herzustellen und somit bevorzugt.

Die horizontal konstante Verlaufsfärbung eines Brillenglases 1 kann dadurch erreicht werden, dass das Brillenglas 1 bis zu einer bestimmten Tiefe in eine Farblösung eingetaucht wird. Bei der Herstellung kann zum Beispiel der zweite Brillenglasbereich 20 überhaupt nicht in die Farblösung eingetaucht werden. Der Übergangsbereich 30 kann bereichsweise unterschiedlich lange, tief und/oder oft in die Farblösung eingetaucht werden. Der erste Brillenglasbereich 10 kann am längsten und/oder relativ oft in die Farblösung eingetaucht werden. Damit ergibt sich eine sich in horizontale Richtung geradlinig eingestellte Verfärbung des Brillenglases 1.

In einer alternativen Ausführungsform muss der Farbverlauf nicht zwingend horizontal konstant und geradlinig wie voranstehend beschrieben ausgebildet sein. So kann der Farbverlauf an die Blickauslenkung des Autofahrers angepasst sein, insbesondere an die Blickauslenkung Richtung Mittelkonsole im Auto, in Richtung zu einem Navigationsbildschirm und/oder ähnlichem. Dabei kann der Verlauf seitlich verschoben und/oder gebogen ausgebildet sein, um auf Gegebenheiten im Fahrzeuginneren angepasst zu sein. So kann insbesondere in Richtung zum Fahrzeuginneren hin, also z.B. in Deutschland nach rechts hin, z.B. in Großbritannien nach links, vom Brillenträger aus gesehen der zweite Brillenglasbereich 20 und/oder der Übergangsbereich 30 vertikal etwas höher angeordnet sein als an dem gegenüberliegenden äußeren horizontalen Brillenglasrand des Brillenglases 1.

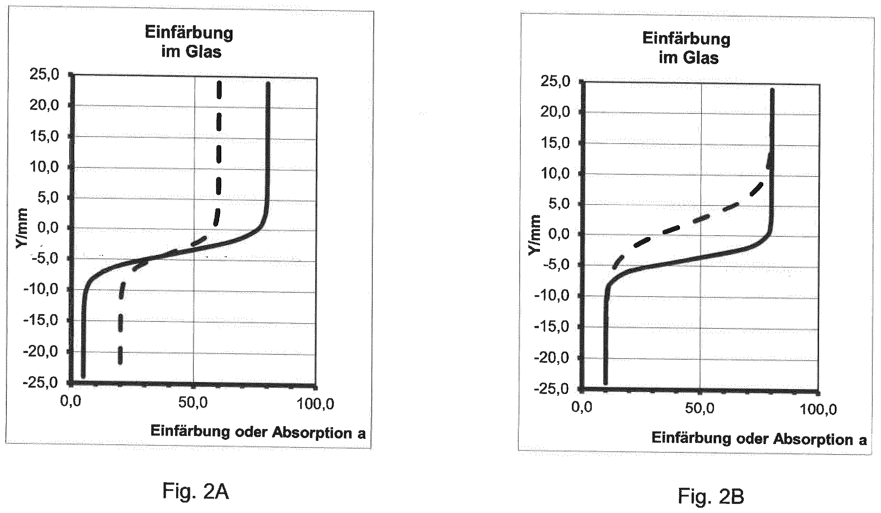

**Figur 2A** zeigt in einem Diagramm zwei Ausführungsformen einer Verlaufsfärbung entlang einer vertikalen Richtung eines Brillenglases. Diese Färbungen unterscheiden sich von den in Figur 1 gezeigten Färbungen. Die Färbungen folgen allerdings beide der durch die voranstehende Gleichung gegebenen Formel.

Ein erstes Ausführungsbeispiel ist in Figur 2A mit einer durchgezogenen Linie gekennzeichnet. Hierbei beträgt die Absorption a1=80%, die Absorption a2=5%, der Faktor c=0,7, und der Umkehrpunkt d ist bei y=-4 mm angeordnet. Dabei ergibt sich die in Figur 2A mit der durchgezogenen Linie gekennzeichnete Verlaufsfärbung.

Ein zweites Ausführungsbeispiel ist in Figur 2A mit der gestrichelten Linie gekennzeichnet. Hierbei beträgt die Absorption a1=60%, die Absorption a2=20%, der Faktor c=0,7, und der Umkehrpunkt d ist bei y=-4 mm angeordnet.

Beide in Figur 2A gezeigten Ausführungsformen ergeben im Praxistest eine sinnvolle Verlaufsfärbung für das Brillenglas 1. In der Figur nicht gezeigt ist die zusätzliche phototrope Eigenschaft des Brillenglases 1.

**Figur 2B** zeigt zwei weitere solche Ausführungsformen in Diagrammform. Hierbei ist im Diagramm wieder die Einfärbung der Ausführungsbeispiele gezeigt, wobei die Einfärbung im Wesentlichen der Absorption des Brillenglases in vertikaler Richtung entspricht.

Ein Ausführungsbeispiel ist in Figur 2B mit einer durchgezogenen Linie gekennzeichnet. Hierbei beträgt die Absorption a1=80%, die Absorption a2=10%, der Faktor c=0,9, und der Umkehrpunkt d ist bei y=-4 mm angeordnet.

Mit einer gestrichelten Linie ist das letzte Ausführungsbeispiel gekennzeichnet. Hierbei beträgt die Absorption a1=80%, die Absorption a2=10%, der Faktor c=0,4, und der Umkehrpunkt d ist bei y=+2 mm angeordnet

Wie im letzten Ausführungsbeispiel gezeigt, resultiert ein kleinerer Faktor c in einer sanfteren Änderung des Farbverlaufs, und somit auch zu einer größeren vertikalen Höhe des Übergangsbereichs 30. Damit kann durch Einstellen des Faktors c die vertikale Höhe des Übergangsbereichs festgelegt und/oder bestimmt werden.

Durch die Verwendung eines der oben genannten Brillengläser können Tasten und/oder Anzeigen im Innenraum des Fahrzeuges durch den hellen Bereich des Brillenglases, also den zweiten Brillenglasbereich 20, einfacher abgelesen werden. Außerhalb des Fahrzeugs dunkelt sich das Brillenglas 1 auch im unteren Brillenglasbereich 20 ein. Dadurch entsteht ein über die Gesamtfläche im Wesentlichen gleichmäßig eingetöntes Sonnenschutzglas.

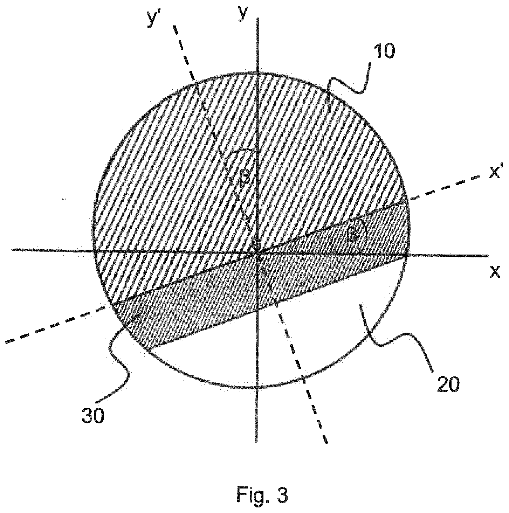

**Figur 3** zeigt in einer schematischen Darstellung ein weiteres Brillenglas mit einem Farbverlauf, der winklig verkippt zur Vertikalen angeordnet ist. Das Brillenglas ist in insgesamt drei Brillenglasbereiche eingeteilt. Ein erster Brillenglasbereich 10 (schraffiert gekennzeichnet) erstreckt sich von einem etwa oben angeordneten Brillenglasrand bis zu einer Oberkante O eines Übergangsbereichs 30. Etwa vom unteren Ende des Brillenglases erstreckt sich ein zweiter Brillenglasbereich 20 bis hin zu einer Unterkante des Übergangsbereichs 30. Der Übergangsbereich 30 ist mit einer engen Schraffur gekennzeichnet und stellt einen dritten Brillenglasbereich dar.

Die Eigenschaften der Brillenglasbereiche 10, 20 und 30 entsprechen im Wesentlichen denen des in Fig. 1 gezeigten Brillenglases 1. Im Unterschied dazu sind die Brillenglasbereiche 10, 20 und 30 einschließlich der Verlaufsfärbung des in Fig. 3 gezeigten Brillenglases um einen Winkel β gegenüber der Vertikalen verkippt und somit winklig zur Vertikalen angeordnet. Der Brechwertverlauf kann jedoch genau dem in Fig. 1 gezeigten Brillenglases entsprechen (und ist somit nicht verkippt).

Genau wie bei dem in Fig. 1 gezeigten Brillenglas 1 ändert sich entlang des Übergangsbereichs 30 die Färbung von der schräg angeordneten Oberkante O bis zur schräg angeordneten Unterkante U im Wesentlichen kontinuierlich. Von der Oberkante O nach schräg unten nimmt die Färbung des Brillenglases entlang des Übergangsbereichs 30 im Wesentlichen kontinuierlich ab.

Ähnlich wie bei dem in Fig. 1 gezeigten Brillenglas 1 kann die Färbung entlang des Übergangsbereichs 30 ungefähr mit der folgenden Gleichung beschrieben werden: $f \left(y′\right) = a 1 + \frac{a 2 - a 1}{\left(1+{e}^{c \left(y′-d\right)}\right)}$

Dies ist eine Funktion der verdrehten Koordinate y' des Brillenglases. Dabei entspricht a1 dem maximalen Absorptionsgrad, im Ausführungsbeispiel etwa 80%. a2 entspricht dem minimalen Absorptionsgrad, im Ausführungsbeispiel ca. 0%. Die Variable c stellt einen Faktor zur Steuerung des Funktionsverlaufs dar, welcher bevorzugt von etwa 0,1 bis etwa 1,0 beträgt. Die Variable d gibt den Umkehrpunkt an.

Im Unterschied zu dem in Fig. 1 gezeigten Brillenglas ist der Verlauf der Färbung des in Fig. 3 gezeigten Brillenglases nicht in genau vertikale Richtung entlang der vertikalen y-Koordinate ausgerichtet, sondern entlang der winklig verdrehten Koordinate y'. Die verdrehte Koordinate y' kann mittels Koordinatentransformation aus der um den Winkel β in der Glasebene verdrehten vertikalen Koordinate y erhalten werden. Hierbei beträgt der Winkel β zwischen 0° und 90°, bevorzugt zwischen 0° und 40°, besonders bevorzugt zwischen 0° und 20°. Für einen solchen winklig gegenüber der Vertikalen verkippten Farbverlauf eignen sich besonders Verkippungswinkel β zwischen 10° und 20°.

Hierbei können beide Brillengläser einer Brille einen in die gleiche Richtung verkippten Farbverlauf aufweisen, so dass eine Mittelkonsole eines Fahrzeugs leichter durch den zweiten Brillenglasbereich 20 abgelesen werden kann. Der Farbverlauf kann somit so verkippt sein, dass der vertikal höchste Punkt des zweiten Brillenglasbereichs 20 an der Glasseite angeordnet ist, die der Mittellängsachse des Fahrzeugs zugewandt ist (in Deutschland z.B. rechts vom Fahrer, in Großbritannien links vom Fahrer, usw.).

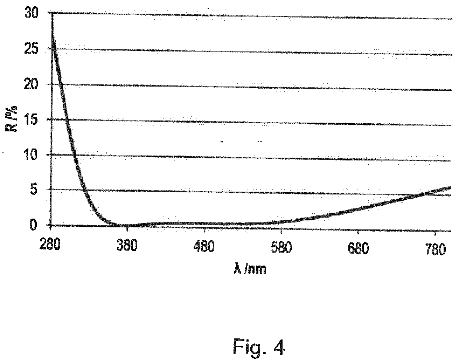

**Figur 4** zeigt in einem Diagramm die Reflexion einer Entspiegelungsschicht, mit der das Brillenglas versehen sein kann.

Grundsätzlich kann das Brillenglas mit jeder beliebigen Entspiegelungsschicht versehen sein. Für das Brillenglas mit der beschriebenen Verlaufsfärbung eignet sich jedoch insbesondere eine qualitativ hochwertige Entspiegelung, also eine Entspiegelungsschicht mit einem möglichst kleinen Restreflex. Eine solche Entspiegelung eignet sich besonders zum Autofahren, um gerade beim Autofahren störende Lichtreflexe zu vermeiden.

Der Restreflexionsverlauf einer solch qualitativ hochwertigen Entspiegelung ist z.B. in Fig. 4 gezeigt. Diese Entspiegelung weist insbesondere im Wellenlängenbereich zwischen 450nm und 550nm einen sehr geringen Restreflex von weniger als 4% pro Brillenglasseite des einfallenden Lichts auf, bevorzugt von weniger als 2% pro Brillenglasseite des einfallenden Lichts, besonders bevorzugt von weniger als 1% pro Brillenglasseite des einfallenden Lichts.

### Bezugszeichenliste

- 1: Brillenglas
- 10: erster Brillenglasbereich
- 20: zweiter Brillenglasbereich
- 30: Übergangsbereich
- F: Fernbezugspunkt und/oder Ferndurchblickspunkt
- O: Oberkante
- U: Unterkante
- d: Umkehrpunkt

## Patentansprüche

1. Brillenglas (1) für eine Brillenfassung mit
- einem ersten Brillenglasbereich (10) und
- einem zweiten Brillenglasbereich (20);
wobei
der erste Brillenglasbereich (10) stärker gefärbt ausgebildet ist als der zweite Brillenglasbereich (20), wobei der erste Brillenglasbereich (10) eine mittlere Absorption des sichtbaren Lichtbereichs von etwa 40% bis etwa 90% aufweist und der zweite Brillenglasbereich (20) eine mittlere Absorption des sichtbaren Lichtbereichs von maximal 20% aufweist;
das Brillenglas (1) zumindest im zweiten Brillenglasbereich (20) phototrop ausgebildet ist, **dadurch gekennzeichnet, dass**
die phototrope Verfärbung des Brillenglases (1) derart auf die Färbung des ersten Brillenglasbereichs (10), oder des ersten und zweiten Brillenglasbereichs (10; 20) abgestimmt ist, dass bei einer vollständigen Aktivierung des phototropen zweiten Brillenglasbereichs (20) durch UV-Lichteinstrahlung das Brillenglas (1) optisch wie ein einfarbiges Brillenglas ohne Verlaufsfärbung aussieht, welches in allen Bereichen gleich stark und im gleichen Farbton gefärbt ist.

2. Brillenglas nach Anspruch 1, wobei der erste Brillenglasbereich (10) im sichtbaren Lichtbereich eine mittlere Transmission von maximal etwa 20% aufweist und/oder der zweite Brillenglasbereich (20) im sichtbaren Lichtbereich eine mittlere Transmission von mindestens etwa 60% aufweist.

3. Brillenglas nach einem der vorangegangenen Ansprüche, wobei der erste Brillenglasbereich (10) als ein oberer Brillenglasbereich ausgebildet ist, welcher zumindest einen Fernbezugspunkt (F) und/oder einen Ferndurchblickspunkt des Brillenglases (1) umfasst, wobei bevorzugt der erste, obere Brillenglasbereich (10) die gesamte Fläche des Brillenglases (1) umfasst, die in Gebrauchsstellung oberhalb des Fernbezugspunkts (F) und/oder des Ferndurchblickspunkts angeordnet ist.

4. Brillenglas nach einem der vorangegangenen Ansprüche, wobei der zweite Brillenglasbereich (20) als ein unterer Brillenglasbereich ausgebildet ist, welcher zumindest einen Nahbezugspunkt und/oder einen Nahdurchblickspunkt des Brillenglases (1) umfasst, wobei bevorzugt der zweite, untere Brillenglasbereich (20) die gesamte Fläche des Brillenglases (1) umfasst, die in Gebrauchsstellung unterhalb des Nahbezugspunkts und/oder des Nahdurchblickspunkts angeordnet ist.

5. Brillenglas nach einem der vorangegangenen Ansprüche, wobei zwischen dem ersten Brillenglasbereich (10) und dem zweiten Brillenglasbereich (20) ein Übergangsbereich (30) ausgebildet ist, entlang dessen die Färbung des Brillenglases (1) vom ersten Brillenglasbereich (10) zum zweiten Brillenglasbereich (20) abnimmt, wobei sich die Färbung bevorzugt entlang des Übergangsbereichs (30) etwa kontinuierlich von dem Färbegrad des ersten Brillenglasbereichs (10) zum Färbegrad des zweiten Brillenglasbereichs (20) verändert.

6. Brillenglas nach Anspruch 5, wobei sich die Färbung entlang des Übergangsbereichs (30) etwa gemäß der Formel verändert: $f \left(y′\right) = a 1 + \frac{a 2 - a 1}{\left(1+{e}^{c \left(y′-d\right)}\right)}$ wobei
*a*1 einem maximalen Absorptionsgrad entspricht,
*a*2 einem minimalen Absorptionsgrad entspricht,
c einem Faktor zur Steuerung des Funktionsverlaufs entspricht,
d der Lage des Umkehrpunkts entspricht, und
y' entweder der vertikalen Brillenglaskoordinate y entspricht, oder einer um einen Winkel β zur der vertikalen Brillenglaskoordinate y verdrehten Brillenglaskoordinate.

7. Brillenglas nach einem der Ansprüche 5 oder 6, wobei sich die Färbung des Brillenglases entlang des Übergangsbereichs (30) entlang einer Strecke von etwa 5 mm bis etwa 20 mm verändert;
und/oder
wobei der Übergangsbereich (30) in einem Brillenglasbereich angeordnet ist, der bei einem Blickwinkel von mindestens etwa 5° unterhalb der Nullblickrichtung beginnt und bei einem Blickwinkel von maximal etwa 25° unterhalb der Nullblickrichtung endet;
und/oder
wobei das Brillenglas (1) einen Brechwertverlauf mit einer Addition aufweist, und wobei der Übergangsbereich (30) in einem Brillenglasbereich von etwa 10% der Addition bis etwa 50% der Addition im Brechwertverlauf angeordnet ist;
und/oder
wobei eine Oberkante (O) des Übergangsbereichs (30) zwischen etwa 5 mm und etwa 20 mm unterhalb des Fernbezugspunkt (F) und/oder des Ferndurchblickspunkts angeordnet ist.

8. Brillenglas nach einem der vorangegangenen Ansprüche, wobei die Färbung der Brillenglasbereiche (10; 20; 30) als eine braune Färbung ausgebildet ist.

9. Brillenglas nach einem der vorangegangenen Ansprüche, mit einer Entspiegelungsschicht, welche im Wellenlängenbereich zwischen 450nm und 550nm einen Restreflex von weniger als 4% pro Brillenglasseite des einfallenden Lichts aufweist.

10. Verwendung eines Brillenglases (1) nach einem der vorangegangenen Ansprüche in einer Brillenfassung beim Autofahren.

11. Verfahren zum Herstellen eines Brillenglases (1) für eine Brillenfassung, wobei ein erster Brillenglasbereich (10) mit einer mittleren Absorption im sichtbaren Lichtbereich von etwa 40% bis etwa 90% stärker gefärbt wird als ein zweiter Brillenglasbereich (20) mit einer mittleren Absorption im sichtbaren Lichtbereich von maximal 20%, wobei zumindest der zweite Brillenglasbereich (20) als ein phototroper Brillenglasbereich bereitgestellt wird, **dadurch gekennzeichnet, dass** die phototrope Verfärbung des Brillenglases (1) derart auf die Färbung des ersten Brillenglasbereichs (10), oder des ersten und zweiten Brillenglasbereichs (10; 20) abgestimmt wird, dass bei einer vollständigen Aktivierung des phototropen zweiten Brillenglasbereichs (20) durch UV-Lichteinstrahlung das Brillenglas (1) optisch wie ein einfarbiges Brillenglas ohne Verlaufsfärbung aussieht, welches in allen Bereichen gleich stark und im gleichen Farbton gefärbt ist.

## Claims

1. A spectacle lens (1) for a spectacle frame, comprising
- a first lens region (10) and
- a second lens region (20);
wherein
the first lens region (10) is tinted more heavily than the second lens region (20), wherein the first lens region (10) has an average absorption in the visible light range of about 40% to about 90%, and the second lens region (20) has an average absorption in the visible light range of no more than 20%;
the spectacle lens (1) is photochromic at least in the second lens region (20); and
the photochromic tinting of the spectacle lens (1) is adjusted to the tint of the first spectacle lens region (10), or of the first and second spectacle lens regions (10; 20) such that, upon complete activation of the photochromic second lens region (20) by UV light irradiation, the lens (1) appears optically like a single-color lens without a gradient tint, which is tinted with the same intensity and in the same shade throughout all regions.

2. Spectacle Lens according to claim 1, wherein the first lens region (10) has an average transmittance of at most about 20% in the visible light range and/or the second lens region (20) has an average transmittance of at least about 60% in the visible light range.

3. Spectacle lens according to any one of the preceding claims, wherein the first lens region (10) is configured as an upper lens region that comprises at least one distance reference point (F) and/or a distance viewing point of the spectacle lens (1), wherein, preferably, the first, upper lens region (10) comprises the entire surface of the lens (1) that is located above the distance reference point (F) and/or the distance viewing point in the position of use.

4. Spectacle lens according to any one of the preceding claims, wherein the second lens region (20) is configured as a lower lens region comprising at least one near reference point and/or one near viewing point of the lens (1), wherein, preferably, the second, lower lens region (20) comprises the entire surface of the lens (1) that, in the position of use, is located below the near reference point and/or the near viewing point.

5. Spectacle lens according to any one of the preceding claims, wherein a transition zone (30) is formed between the first lens region (10) and the second lens region (20), along which the tint of the lens (1) decreases from the first lens region (10) to the second lens region (20), wherein the tint preferably changes approximately continuously along the transition region (30) from the tint level of the first lens region (10) to the tint level of the second lens region (20).

6. Spectacle lens according to claim 5, wherein the tint varies along the transition zone (30) approximately according to the formula: $f \left(y′\right) = a 1 + \frac{a 2 - a 1}{\left(1+{e}^{c \left(y′-d\right)}\right)}$ where
*a*1 corresponds to a maximum absorption coefficient,
*a*2 corresponds to a minimum absorption coefficient,
*c* corresponds to a factor for controlling the functional profile,
*d* corresponds to the position of the inflection point, and
*y'* corresponds either to the vertical lens coordinate *y*, or to a lens coordinate rotated by an angle β relative to the vertical lens coordinate *y*.

7. Spectacle lens according to any one of claims 5 or 6, wherein the tint of the lens changes along the transition zone (30) over a distance of about 5 mm to about 20 mm;
and/or
wherein the transition zone (30) is located in a lens region that begins at a viewing angle of at least about 5° below the primary direction and ends at a viewing angle of at most about 25° below the primary direction;
and/or
wherein the lens (1) comprises a power profile with an addition, and wherein the transition zone (30) is located in a lens region ranging from about 10% of the addition to about 50% of the addition in the power profile;
and/or
wherein an upper edge (O) of the transition zone (30) is located between approximately 5 mm and approximately 20 mm below the distance reference point (F) and/or the distance viewing point.

8. Spectacle lens according to any one of the preceding claims, wherein the tint of the lens regions (10; 20; 30) is brown.

9. Spectacle lens according to any one of the preceding claims, comprising an anti-reflective coating that exhibits a residual reflection of less than 4% per lens surface of the incident light in the wavelength range between 450 nm and 550 nm.

10. Use of a spectacle lens (1) according to any one of the preceding claims in spectacle frames while driving.

11. A method for manufacturing a spectacle lens (1) for a spectacle frame, wherein a first lens region (10) with an average absorption in the visible light range of about 40% to about 90% is tinted more heavily than a second lens region (20) with an average absorption in the visible light range of at most 20%, wherein at least the second lens region (20) is provided as a photochromic lens region, and wherein the photochromic tinting of the lens (1) is adjusted to the tint of the first lens region (10), or of the first and second lens regions (10; 20) such that, upon complete activation of the photochromic second lens region (20) by UV light irradiation, the lens (1) appears optically like a single-color lens without a gradient tint, which is tinted with the same intensity and in the same shade throughout all regions.

## Revendications

1. Verre de lunettes (1) destiné à une monture de lunettes, comprenant
- une première zone de verre (10) et
- une deuxième zone de verre (20) ;
dans lequel
la première zone de verre de lunettes (10) est teintée plus fortement que la deuxième zone de verre de lunettes (20), la première zone de verre (10) présentant une absorption moyenne dans le spectre de la lumière visible comprise entre environ 40 % et environ 90 %, et la deuxième zone de verre (20) présentant une absorption moyenne dans le spectre de la lumière visible inférieure ou égale à 20 % ;
le verre de lunettes (1) est photochromique au moins dans la deuxième zone de verre (20) ; et
la coloration photochromique du verre de lunettes (1) est adaptée à la coloration de la première zone de verre de lunettes (10), ou des première et deuxième zones de verre de lunettes (10 ; 20) de telle sorte que, lors d'une activation complète de la deuxième zone phototrope (20) du verre de lunettes par un rayonnement UV, le verre de lunettes (1) présente optiquement l'aspect d'un verre de lunettes monochrome sans dégradé, teinté de manière uniforme et dans la même nuance de couleur dans toutes ses zones.

2. Verre de lunettes selon la revendication 1, dans lequel la première zone de verre (10) présente, dans le spectre de la lumière visible, une transmission moyenne d'au plus environ 20 % et/ou la deuxième zone de verre (20) présente, dans le spectre de la lumière visible, une transmission moyenne d'au moins environ 60 %.

3. Verre de lunettes selon l'une des revendications précédentes, dans lequel la première zone (10) du verre de lunettes est conçue comme une zone supérieure du verre de lunettes qui comprend au moins un point de référence de vision de loin (F) et/ou un point de vision de loin du verre de lunettes (1), la première zone supérieure (10) du verre de lunettes comprenant de préférence toute la surface du verre de lunettes (1) qui, en position d'utilisation, est située au-dessus du point de référence de vision de loin (F) et/ou du point de vision de loin.

4. Verre de lunettes selon l'une des revendications précédentes, la deuxième zone du verre de lunettes (20) étant conçue comme une zone inférieure du verre de lunettes qui comprend au moins un point de référence de près et/ou un point de vision de près du verre de lunettes (1), la deuxième zone inférieure du verre de lunettes (20) couvre toute la surface du verre de lunettes (1) qui, en position d'utilisation, est située en dessous du point de référence de près et/ou du point de vision de près.

5. Verre de lunettes selon l'une des revendications précédentes, dans lequel une zone de transition (30) est formée entre la première zone du verre (10) et la deuxième zone du verre (20), le long de laquelle la teinte du verre (1) diminue de la première zone (10) vers la deuxième zone (20), la teinte variant de préférence de manière pratiquement continue le long de la zone de transition (30), du degré de teinte de la première zone (10) vers celui de la deuxième zone (20).

6. Verre de lunettes selon la revendication 5, dans lequel la teinte varie le long de la zone de transition (30) approximativement selon la formule : $f \left(y′\right) = a 1 + \frac{a 2 - a 1}{\left(1+{e}^{c \left(y′-d\right)}\right)}$ où *a*1 correspond à un degré d'absorption maximal,
*a*2 correspond à un degré d'absorption minimal,
*c* correspond à un facteur de contrôle de la courbe de fonction,
*d* correspond à la position du point d'inversion, et
*y'* correspond soit à la coordonnée verticale du verre de lunettes *y*, soit à une coordonnée du verre de lunettes tournée d'un angle β par rapport à la coordonnée verticale du verre de lunettes *y*.

7. Verre de lunettes selon l'une des revendications 5 ou 6, dans lequel la teinte du verre de lunettes varie le long de la zone de transition (30) sur une distance d'environ 5 mm à environ 20 mm;
et/ou
dans lequel la zone de transition (30) est disposée dans une zone du verre de lunettes qui commence à un angle de vision d'au moins environ 5° en dessous de la direction de vision zéro et se termine à un angle de vision d'au plus environ 25° en dessous de la direction de vision zéro;
et/ou
le verre de lunettes (1) présentant une courbe de puissance avec une addition, et la zone de transition (30) étant située dans une partie du verre de lunettes allant d'environ 10 % de l'addition à environ 50 % de l'addition sur la courbe de puissance;
et/ou
un bord supérieur (O) de la zone de transition (30) étant situé entre environ 5 mm et environ 20 mm en dessous du point de référence de loin (F) et/ou du point de vision de loin.

8. Verre de lunettes selon l'une des revendications précédentes, la teinte des zones du verre (10; 20; 30) étant de couleur brune.

9. Verre de lunettes selon l'une des revendications précédentes, comportant une couche antireflet qui présente, dans la plage de longueurs d'onde comprise entre 450 nm et 550 nm, une réflexion résiduelle inférieure à 4 % par face du verre de la lumière incidente.

10. Utilisation d'un verre de lunettes (1) selon l'une des revendications précédentes dans une monture de lunettes lors de la conduite automobile.

11. Procédé de fabrication d'un verre de lunettes (1) destiné à une monture de lunettes, dans lequel une première zone du verre (10), présentant une absorption moyenne dans le domaine de la lumière visible comprise entre environ 40 % et environ 90 %, est teintée plus fortement qu'une deuxième zone du verre (20), présentant une absorption moyenne dans le domaine de la lumière visible de 20 % au maximum, au moins la deuxième zone de verre (20) étant réalisée sous la forme d'une zone de verre photochromique, et la coloration photochromique du verre (1) étant adaptée à la coloration de la première zone de verre (10), ou des première et deuxième zones de verre (10 ; 20) de telle sorte que, lors d'une activation complète de la deuxième zone de verre de lunettes photochromique (20) par un rayonnement UV, le verre de lunettes (1) présente optiquement l'aspect d'un verre de lunettes monochrome sans dégradé de teinte, teinté de manière uniforme et dans la même nuance de couleur dans toutes ses zones.
